# FASCICULE DE BREVET EUROPEEN

(11) **EP 0 768 817 B1**
(45) Date de publication et mention de la délivrance du brevet: **15.03.2000**
(21) Numéro de dépôt: 95924376.7
(22) Date de dépôt: 28.06.1995
(51) Int. Cl.: A01N 25/02

(54) **CONCENTRES EMULSIONNABLES RENFERMANT UN OU PLUSIEURS PESTICIDES**
EIN ODER MEHRERE PESTIZIDE EINSCHLIESSENDE EMULGIERBARE KONZENTRATE
EMULSIFIABLE CONCENTRATES CONTAINING ONE OR MORE PESTICIDES

(30) Priorité: 01.07.1994 FR 9408139
(43) Date de publication de la demande: 23.04.1997
(73) Titulaire: Hoechst Schering AgrEvo S.A., 75020 Paris (FR)
(72) Inventeur: HENRIET, Michel, F-13390 Auriol (FR); TARANTA, Claude, F-13090 Aix-en-Provence (FR)
(74) Mandataire: Tonnellier, Marie-José
(86) Numéro de dépôt international: FR9500859
(87) Numéro de publication internationale: WO9601047

(56) Documents cités:
- EP-A- 0 045 424
- EP-A- 0 237 227
- EP-A- 0 394 847
- EP-A- 0 557 192
- EP-A- 0 567 368
- WO-A-90/06681
- WO-A-90/09103
- WO-A-94/16732
- FR-A- 2 405 015
- GB-A- 2 058 569
- GB-A- 2 267 826
- US-A- 4 617 318

## Description

La présente invention concerne de nouveaux concentrés émulsionnables renfermant un ou plusieurs pesticides.

On connaissait des compositions pesticides renfermant un pyréthrinoïde, une huile végétale, un solvant et un système tensio actif émulsionnant (EPA 567.368). On connaissait également des concentrés émulsionnables renfermant un pyréthrinoïde, un excipient qui peut contenir des huiles végétales, un système tensio-actif et optionnellement des solvants et des stabilisants (GBA 2.058.569). On connaissait aussi des compositions renfermant un pyréthrinoïde, une huile végétale et un système tensio-actif constitué par exemple par un mélange d'agents tensio-actifs non ioniques et anioniques (USA 4.617.318). On connaissait (EPA 394.847) des compositions herbicides renfermant un agent tensio-actif non ionique et un agent anionique et un solvant.

L'invention a pour objet des concentrés émulsionnables (CE) renfermant :
- un ou plusieurs pyréthrinoïdes,
- un solvant choisi parmi les esters méthyliques d'un mélange d'acide caprylique et d'acide caprique, le diéthylphtalate et le lactate d'éthyl-hexyle,
- un système tensio-actif émulsionnant produisant une émulsion "huile dans l'eau" lors de l'application du produit constitué d'un mélange d'agents tensio-actifs non ioniques et de dodécylbenzènesulfonate de calcium.

Ces nouvelles formulations possèdent par rapport aux formulations classiques un point-éclair plus élevé et présentent une meilleure tolérance oculaire comme le montrent les résultats des tests toxicologiques exposés ci-après, tout en conservant leur degré d'activité pesticide.

Ces formulations sont aussi efficaces que les formulations classiques, tout en étant plus faciles à stocker et à transporter, et plus agréables à manipuler par l'utilisateur.

Une des caractéristiques essentielles de l'invention est l'emploi de solvants qui ne sont pas choisis dans la classe des hydrocarbures aromatiques.

Parmi les pyréthrinoïdes susceptibles d'être utilisés, on peut citer la deltaméthrine, l'acrinathrine, la tralométhrine, la perméthrine, la cyperméthrine et les différents mélanges d'isomères qui en sont issus et notamment l'alphacyperméthrine, l'alléthrine, l'esbiothrine, la kadéthrine, l'alphaméthrine, la bioresméthrine, la tétraméthrine, la cyhalothrine et les différents mélanges d'isomères qui en sont issus et en particulier la lambdacyhalothrine, la cyfluthrine et les différents mélanges d'isomères qui en sont issus et en particulier la bétacyfluthrine, le fenvalérate et les différents mélanges d'isomères qui en sont issus et en particulier l'esfenvalérate, le fluvalinate et les différents mélanges d'isomères qui en sont issus et en particulier le taufluvalinate, le flucythrinate, la fenpropathrine, la téfluthrine, la bifenthrine ou le silafluofen.

On peut aussi citer les produits des brevets EP 0557192 ou 0556123, et notamment le [1R,(1alpha, 3alpha)] 3-[(Z) 2-chloro 3,3,3-trifluoro 1-propényl] 2,2-diméthyl cyclopropanecarboxylate de [2,6-bis (trifluorométhyl) phényl] méthyle décrit et revendiqué dans le brevet EP 0 557 192.

Comme pyréthrinoïde préféré, on peut citer : la deltaméthrine, l'acrinathrine, la tralométhrine, la perméthrine, la cyperméthrine, l'alphaméthrine, la cyhalothrine, le fenvalérate, la cyfluthrine, le flucythrinate, le fluvalinate, la fenpropathrine, la bifenthrine, l'esfenvalérate, l'alphacyperméthrine, la bétacyfluthrine, la lambdacyhalothrine, le taufluvalinate ou le silafluofen.

Parmi les pyréthrinoïdes préférés, on peut citer tout spécialement la deltaméthrine, l'acrinathrine ainsi que le [1R,(1alpha, 3alpha)] 3-[(Z) 2-chloro 3,3,3-trifluoro 1-propényl] 2,2-diméthyl cyclopropanecarboxylate de [2,6-bis (trifluorométhyl) phényl] méthyle.

L'invention a également pour objet des concentrés caractérisés en ce qu'ils renferment en plus du pyréthrinoide, un ou plusieurs insecticides non pyréthrinoïdes.

On peut citer également comme insecticides associés aux pyréthrinoïdes, les insecticides de la classe des organo-phosphorés comme le trichlorfon, le diazinon, le fénitrothion, l'acéphate, le phosmet, les composés de la classe des organochlorés comme l'endosulfan, les composés de la classe des formamidines comme l'amitraze, les composés de la classe des sulfonates comme le tétradifon et la propargite, les composés de la classe des dérivés de l'acide benzhydroxamique comme le benzoximate, les composés de la classe des benzoylurées comme le benzfluazuron, les composés de la classe des acylurées comme le flufénoxuron, les composés de la classe des tétrazines comme la clofentézine, les composés de la classe des thiadiazines comme le buprofézin, les composés de la classe des pyridazinones comme le pyridabène, les composés de la classe des carbamates comme le pyrimicarbe, le thiophanox, le bendiocarbe, le benfucarbe, le furathiocarbe et le thiazamate, les composés de la classe des carbamyl tétrazoles comme le triazamate.

Comme co-insecticides préférés, on peut citer, par exemple, l'endosulfan et le pyrimicarbe.

Dans le cas de matières actives solides peu solubles dans les solvants cités précédemment, on peut faire appel à des co-solvants polaires sélectionnés parmi des produits connus pour leur caractère relativement peu irritant pour l'oeil. Ces co-solvants sont utilisés en quantité minimale de manière à augmenter la solubilité de la matière active jusqu'à obtenir la concentration visée en matière active dans la formulation.

Comme co-solvants polaires, on peut citer les dérivés de la classe des cétones, des alkylpyrrolidones, par exemple la N-octylpyrrolidone, la N-dodécylpyrrolidone, la N-hydroxy 2-éthyl pyrrolidone et des dérivés de l'urée comme la diméthylpropylène urée.

L'invention a également pour objet des concentrés caractérisés en ce qu'ils renferment en outre un stabilisant.

Comme stabilisant de la matière active, on peut utiliser par exemple des acides organiques comme l'acide acétique, l'acide citrique et des anti-oxydants comme le butylhydroxytoluène et le bétapinène.

Les formulations de l'invention peuvent également contenir tous les additifs solides ou liquides correspondant aux techniques habituelles de mise en formulation telles qu'un colorant, un agent anti-mousse.

L'invention a plus particulièrement pour objet les concentrés caractérisés en ce qu'ils renferment de 0,1 à 60 % de pyréthrinoïde, de 5 à 85 % de solvant organique, de 1 à 30 % d'agents tensio-actifs et de 0,05 à 8 % de stabilisant et plus spécialement les concentrés émulsionnables caractérisés en ce qu'ils renferment de 0,5 à 30 % de pyréthrinoide, de 10 à 75 % de solvant organique, de 1,5 à 20 % d'agents tensio-actifs et de 0,1 à 5 % d'agents stabilisants ou encore les concentrés émulsionnables caractérisés en ce qu'ils renferment de 0,1 à 40 % et tout particulièrement de 0,1 à 30 % de pyréthrinoïde et de 0,5 à 40 % d'insecticide(s) non pyréthrinoïdes et plus spécialement les concentrés émulsionnables caractérisés en ce qu'ils renferment de 0,5 à 15 % de pyréthrinoïde et de 1,0 à 30 % d'insecticide(s) non pyréthrinoïde(s).

L'invention a également pour objet l'application en agriculture des concentrés émulsionnables tels que définis ci-dessus, caractérisée en ce que les concentrés sont dilués dans l'eau et répandus sur les cultures à raison de 0,075 à 2,0 l de produit formulé par hectare.

Les exemples suivants illustrent l'invention.

On a préparé les concentrés émulsionnables suivants :

### EXEMPLE 1 :

| | g/l |
|---|---|
| Deltaméthrine tech. (98,5 %) | 25,38 |
| Ester méthylique d'un mélange d'acide caprylique/caprique (solvant organique) (1) | 663,42 |
| N-octyl pyrrolidone (co-solvant organique) (2) | 72,00 |
| Mélange d'agents tensio-actifs non ioniques et de dodécylbenzène sulfonate de calcium (agents émulsifiants) (3) | 26,00 |
| Trioléate de sorbitan polyéthoxylé (4) | 124,00 |
| Acide citrique (stabilisant) (5) | 0,20 |
| Butyl hydroxy toluène (stabilisant) (6) | 1,00 |

### EXEMPLE 2 :

| | g/l |
|---|---|
| Deltaméthrine tech. (98,5 %) | 25,38 |
| Diéthyl phtalate (solvant organique) (7) | 940,52 |
| Mélange d'agents tensio-actifs non ioniques et de dodécylbenzène sulfonate de calcium (agents émulsifiants) (2) | 45,00 |
| Arylphénol polyéthoxylé (8) | 105,00 |
| Acide acétique (stabilisant) (9) | 0,10 |
| Butyl hydroxy toluène (stabilisant) (5) | 1,00 |

### EXEMPLE 3 :

| | g/l |
|---|---|
| Deltaméthrine tech. (98,5 %) | 25,38 |
| Ester méthylique d'un mélange d'acide caprylique/caprique (solvant organique) (1) | 568,62 |
| Dibasic esters (co-solvant organique) (10) | 200,00 |
| Mélange d'agents tensio-actifs non ioniques et de dodécylbenzène sulfonate de calcium (agents émulsifiants) (3) | 60,00 |
| Trioléate de sorbitan polyéthoxylé (4) | 90,00 |
| Acide citrique (stabilisant) (5) | 0,20 |
| Butyl hydroxy toluène (stabilisant) (6) | 1,00 |

### EXEMPLE 4 :

| | g/l |
|---|---|
| Deltaméthrine tech. (98,5 %) | 15,20 |
| Ester méthylique d'un mélange d'acide caprylique/caprique (solvant organique) (1) | 736,70 |
| Mélange d'agents tensio-actifs non ioniques et de dodécylbenzène sulfonate de calcium (agents émulsifiants) (3) | 59,00 |
| Trioléate de sorbitan polyéthoxylé (4) | 91,00 |
| Acide acétique (stabilisant) (9) | 0,10 |
| Butyl hydroxy toluène (stabilisant) (6) | 1,00 |

### EXEMPLE 5 :

| | g/l |
|---|---|
| Deltaméthrine tech. (98,5 %) | 15,20 |
| Diéthyl phtalate (solvant organique) (7) | 945,70 |
| Mélange d'agents tensio-actifs non ioniques et de dodécylbenzène sulfonate de calcium (agents émulsifiants) (3) | 50,00 |
| Arylphénol polyéthoxylé (8) | 105,00 |
| Acide acétique (stabilisant) (9) | 0,10 |
| Butyl hydroxy toluène (stabilisant) (6) | 1,00 |

### EXEMPLE 6 :

| | g/l |
|---|---|
| Acrinathrine tech. (98,6 %) | 76,10 |
| Ester méthylique d'un mélange d'acide caprylique/caprique (solvant organique) (1) | 694,00 |
| Mélange d'agents tensio-actifs non ioniques et de dodécylbenzène sulfonate de calcium (agents émulsifiants) (3) | 69,00 |
| Trioléate de sorbitan polyéthoxylé (4) | 81,00 |
| Acide acétique (stabilisant) (9) | 0,10 |
| Butyl hydroxy toluène (stabilisant) (6) | 0,10 |

### EXEMPLE 7 :

| | g/l |
|---|---|
| Acrinathrine tech. (98,6 %) | 76,10 |
| Diéthyl phtalate (solvant organique) (7) | 896,70 |
| Mélange d'agents tensio-actifs non ioniques et de dodécylbenzène sulfonate de calcium (agents émulsifiants) (3) | 45,00 |
| Arylphénol polyéthoxylé (8) | 105,00 |
| Acide acétique (stabilisant) (9) | 0,10 |
| Butyl hydroxy toluène (stabilisant) (6) | 1,00 |

### EXEMPLE 8 :

| | g/l |
|---|---|
| Lambdacyhalothrine (≥ 98 %) | 25,51 |
| Ester méthylique d'un mélange d'acide caprylique/caprique (solvant organique) (1) | 660,00 |
| N-octyl pyrrolidone (co-solvant organique) (2) | 75,00 |
| Mélange d'agents tensio-actifs non ioniques et de dodécylbenzène sulfonate de calcium (agents émulsifiants) (3) | 26,00 |
| Trioléate de sorbitan polyéthoxylé (4) | 124,00 |
| Acide citrique (stabilisant) (5) | 0,20 |
| Butyl hydroxy toluène (stabilisant) (6) | 1,00 |

### EXEMPLE 9 :

| | g/l |
|---|---|
| Lambdacyhalothrine (≥ 98 %) | 25,51 |
| Diéthyl phtalate (solvant organique) (7) | 940,00 |
| Mélange d'agents tensio-actifs non ioniques et de dodécylbenzène sulfonate de calcium (agents émulsifiants) (2) | 45,00 |
| Arylphénol polyéthoxylé (8) | 105,00 |
| Acide acétique (stabilisant) (9) | 0,10 |
| Butyl hydroxy toluène (stabilisant) (5) | 1,00 |

### EXEMPLE 10 :

| | g/l |
|---|---|
| Deltaméthrine tech. (98,5 %) | 5,10 |
| Endosulfan tech. (97,5 %) | 205,10 |
| Diéthyl phtalate (solvant organique) (7) | 774,70 |
| Mélange d'agents tensio-actifs non ioniques et de dodécylbenzène sulfonate de calcium (agents émulsifiants) (3) | 57,00 |
| Arylphénol polyéthoxylé (8) | 93,00 |
| Acide acétique (stabilisant) (9) | 0,10 |
| Butyl hydroxy toluène (stabilisant) (6) | 1,00 |
| Béta-pinène (stabilisant) (11) | 40,00 |

### EXEMPLE 11 :

| | g/l |
|---|---|
| Deltaméthrine tech. (98,5 %) | 5,10 |
| Endosulfan tech. (97,5 %) | 205,10 |
| Ester méthylique d'un mélange d'acide caprylique/caprique (solvant organique) (1) | 600,70 |
| Mélange d'agents tensio-actifs non ioniques et de dodécylbenzène sulfonate de calcium (agents émulsifiants) (3) | 48,00 |
| Trioléate de sorbitan polyéthoxylé (4) | 102,00 |
| Acide acétique (stabilisant) (9) | 0,10 |
| Butyl hydroxy toluène (stabilisant) (6) | 1,00 |
| Béta-pinène (stabilisant) (11) | 40,00 |

### EXEMPLE 12 :

| | g/l |
|---|---|
| Deltaméthrine tech. (98,5 %) | 7,60 |
| Pyrimicarbe tech. (97,1 %) | 103,00 |
| Diéthyl phtalate (solvant organique) (7) | 854,80 |
| Mélange d'agents tensio-actifs non ioniques et de dodécylbenzène sulfonate de calcium (agents émulsifiants) (3) | 50,00 |
| Arylphénol polyéthoxylé (8) | 100,00 |
| Acide acétique (stabilisant) (9) | 0,50 |
| Butyl hydroxy toluène (stabilisant) (6) | 0,10 |

### EXEMPLE 13 :

| | g/l |
|---|---|
| Deltaméthrine tech. (98,5 %) | 15,20 |
| Ester méthylique d'un mélange d'acide caprylique/caprique (solvant organique) (1) | 518,50 |
| Mélange d'alkylbiphényle (solvant organique) (12) | 284,70 |
| Mélange d'agents tensio-actifs non ioniques et de dodécylbenzène sulfonate de calcium (agents émulsifiants) (3) | 56,00 |
| Trioléate de sorbitan polyéthoxylé (4) | 44,00 |
| Acide acétique (stabilisant) | 0,10 |
| Butyl hydroxy toluène (stabilisant) (6) | 1,00 |

### EXEMPLE 14 :

| | g/l |
|---|---|
| [1R, (1alpha, 3alpha)] 3-[(Z) 2-chloro 3,3,3-trifluoro 1-propényl] 2,2-diméthyl cyclopropanecarboxylate de [2,6-bis (trifluorométhyl) phényl] méthyle (isomère Z) (89,9%) | 55,60 |
| Diéthyl phtalate (solvant organique) (7) | 914,40 |
| Mélange d'agents tensio-actifs non ioniques et de dodécylbenzène sulfonate de calcium (agents émulsifiants) (3) | 45,00 |
| Arylphénol polyéthoxylé (8) | 105,00 |
| Butyl hydroxy toluène (stabilisant) (6) | 1,00 |

### EXEMPLE 15 :

| | g/l |
|---|---|
| [1R, (1alpha, 3alpha)] 3-[(Z) 2-chloro 3,3,3-trifluoro 1-propényl] 2,2-diméthyl cyclopropanecarboxylate de [2,6-bis (trifluorométhyl) phényl] méthyle (isomère Z) (89,9%) | 55,60 |
| Ester méthylique d'un mélange d'acide caprylique/caprique (solvant organique) (1) | 708,40 |
| Mélange d'agents tensio-actifs non ioniques et de dodécylbenzène sulfonate de calcium (agents émulsifiants) (3) | 60,00 |
| Trioléate de sorbitan polyéthoxylé (4) | 90,00 |
| Butyl hydroxy toluène (stabilisant) (6) | 1,00 |

Dénominations commerciales des co-formulants utilisés dans les exemples 1 à 21 :
(1) RADIA 7881 commercialisé par FINA
(2) AGSOL EX 8 commercialisé par ISP
(3) SPONTO 232 HFP commercialisé par WITCO
(4) TWEEN 85 commercialisé par ICI SURFACTANTS
(5) ACIDE CITRIQUE commercialisé par JUNGBUNZLAUER
(6) RHODIANOX BHT AT1 commercialisé par GREAT LAKES CHEMICAL
(7) DIETHYLPHTALATE commercialisé par RHONE-POULENC
(8) AGRILAN AEC 145 commercialisé par AKCROS
(9) ACIDE ACETIQUE commercialisé par MONTEDISON
(10) RHODIASOLV RPDE commercialisé par RHONE POULENC
(11) BETA-PINENE 85 commercialisé par DERIVES RESINIQUES & TERPENIQUES SA
(12) BVA XK3 commercialisé par BVA OILS

### PROCEDE DE PREPARATION

Les concentrés émulsionnables décrits précédemment sont préparés suivant des procédés classiques dans l'art de formuler, à savoir :
1) Addition des agents stabilisants dans le système solvant, sous agitation,
2) Dissolution de la matière active solide ou résinoïde, ou dilution de la matière active liquide dans le mélange préparé en 1), sous agitation,
3) Addition des agents tensio-actifs utilisés comme agents émulsifiants, sous agitation.

### EVALUATION DES NOUVELLES FORMULATIONS

### Stabilité physico-chimique

Les nouvelles compositions de l'invention maintiennent leurs propriétés physico-chimiques initiales après un stockage de 6 semaines consécutives dans une étuve à 50°C et de 6 semaines en cycle journalier de 12 heures (la température est de -6°C pendant 12 heures et de 44°C pendant 12 heures).

Ces formulations présentent des points éclairs ≥ 70°C.

### Tolérance oculaire des compositions de l'invention

La tolérance oculaire des compositions de l'invention a été étudiée sur la cornée de boeuf isolée.

La réaction d'irritation oculaire est un phénomène complexe pouvant entraîner non seulement une opacification de la cornée mais également dans certains cas des lésions de l'épithélium cornéen avec changement de la perméabilité.

La méthode sur la cornée de boeuf, permettant d'évaluer le potentiel irritant de substances solubles et insolubles, comprend deux étapes :
- mesure de l'opacité après application du produit sur la face épithéliale de la cornée,
- puis application d'une solution de fluorescéine et détermination de la quantité de ce marqueur ayant traversé la cornée (mesure de la perméabilité).

Afin d'établir une corrélation avec les données in vivo un score d'irritation in vitro a été établi. Ce score est égal à la valeur d'opacité plus quinze fois la valeur de la perméabilité, qui est exprimée en densité optique. Plus le score d'irritation est élevé, plus la formulation est irritante. Ces calculs ont été définis après exploitation des résultats d'une étude de validation portant sur 50 produits chimiques différents testés en aveugle par 12 laboratoires européens.

Les diverses formulations de l'invention ont été étudiées.

Les concentrés émulsionnables de référence suivants ont été étudiés :

Une composition Décis CE 25 contenant 25 g/l de deltaméthrine dans du SOLVESSO 100, une composition Décis CE 15 contenant 15 g/l de deltaméthrine dans du SOLVESSO 100, des compositions d'acrinathrine CE 75 renfermant 75 g/l d'acrinathrine, une composition CE de deltaméthrine et d'endosulfan (5 + 200 g/l) dans du SOLVESSO 100 et une composition de l'invention renfermant de la deltaméthrine et du pyrimicarbe (7,5 + 100 g/l CE).

Les tableaux indiquent les résultats obtenus suivant la méthode basée sur la cornée de boeuf isolée (dont le principe est décrit ci-dessus).

Il a été trouvé que les compositions de l'invention sont nettement moins irritantes que les compositions de l'art antérieur.

**TABLEAU A**

| TEST 1 | |
|---|---|
| Compositions | Méthode C.B.I. |
| DECIS CE 25 (1) | Score : 77,0 |
| Composition de l'exemple 1 | Score : 15,0 |
| Composition de l'exemple 2 | Score : 6,0 |
| Composition de l'exemple 3 | Score : 14,0 |

| | |
|---|---|
| (1) Formulation de deltaméthrine 25 g/l CE à base de SOLVESSO 100 C.B.I. Cornée de boeuf isolée. | |

**TABLEAU B**

| TEST 2 | |
|---|---|
| Compositions | Méthode C.B.I. |
| DECIS CE 15 (1) | Score : 59,6 |
| Composition de l'exemple 4 | Score : 10,7 |
| Composition de l'exemple 5 | Score : 10,7 |

| | |
|---|---|
| (1) Formulation de deltaméthrine 15 g/l CE à base de SOLVESSO 100 C.B.I. Cornée de boeuf isolée. | |

**TABLEAU C**

| TEST 3 | |
|---|---|
| Compositions | Méthode C.B.I. |
| ACRINATHRINE CE 75(1) | Score : 58,8 |
| Composition de l'exemple 6 | Score : 8,9 |
| Composition de l'exemple 7 | Score : 3,8 |

| | |
|---|---|
| (1) Formulation d'acrinathrine 15 g/l CE à base de SOLVESSO 100 C.B.I. Cornée de boeuf isolée. | |

**TABLEAU D**

| TEST 4 | |
|---|---|
| Compositions | Méthode C.B.I. |
| deltaméthrine + endosulfan 5 + 200 g/l CE (1) | Score : 62,7 |
| Composition de l'exemple 10 | Score : 6,0 |
| Composition de l'exemple 11 | Score : 7,4 |

| | |
|---|---|
| (1) Formulation de deltaméthrine + endosulfan 5 + 200 g/l CE à base de SOLVESSO 100 C.B.I. Cornée de boeuf isolée. | |

**TABLEAU E**

| TEST 5 | |
|---|---|
| Compositions | Méthode C.B.I. |
| deltaméthrine + pyrimicarbe 7,5 + 100 g/l CE (1) | Score : 36,6 |
| Composition de l'exemple 12 | Score : 1,2 |

| | |
|---|---|
| (1) Formulation de deltaméthrine + pyrimicarbe 7,5 + 100 g/l CE à base de SOLVESSO 100 et d'orthochlorotoluène C.B.I. Cornée de boeuf isolée. | |

### Test d'efficacité biologique

Les nouveaux concentrés émulsionnables ont été testés sur Rhopalosiphum padi en comparaison avec les concentrés émulsionnables de référence mentionnés ci-dessus.

Les concentrés émulsionnables de l'invention ont une activité comparable à celle des concentrés de référence aux doses de 6,25 g de matière active à l'hectare.

Ainsi les concentrés de l'invention sont particulièrement intéressants, en ce qu'ils présentent la même activité que les concentrés du commerce, tout en étant nettement moins irritants pour les yeux.

## Revendications

1. Concentrés émulsionnables (CE) renfermant :
- un ou plusieurs pyréthrinoïdes,
- un solvant choisi parmi les esters méthyliques d'un mélange d'acide caprylique et d'acide caprique, le diéthylphtalate et le lactate d'éthyl-hexyle,
- un système tensio-actif émulsionnant produisant une émulsion "huile dans l'eau" lors de l'application du produit constitué d'un mélange d'agents tensio-actifs non ioniques et de dodécylbenzènesulfonate de calcium.

2. Concentrés émulsionnables selon la revendication 1, caractérisés en ce que le pyréthrinoïde est choisi parmi les composés suivants :
la deltaméthrine, l'acrinathrine, la tralométhrine, la perméthrine, la cyperméthrine, l'alphaméthrine, la cyhalothrine, le fenvalérate, la cyfluthrine, le flucythrinate, le fluvalinate, la fenpropathrine, la bifenthrine, l'esfenvalérate, l'alphacyperméthrine, la bétacyfluthrine, la lambdacyhalothrine, le taufluvalinate ou le silafluofen.

3. Concentrés émulsionnables selon la revendication 2, caractérisés en ce que le pyréthrinoïde est la deltaméthrine.

4. Concentrés émulsionnables selon la revendication 2, caractérisés en ce que le pyréthrinoïde est l'acrinathrine.

5. Concentrés émulsionnables selon l'une quelconque des revendications 1 à 4, caractérisés en ce qu'ils renferment en plus du pyréthrinoïde, un ou plusieurs insecticides non pyréthrinoïdes.

6. Concentrés émulsionnables selon la revendication 5, caractérisés en ce que l'insecticide non pyréthrinoïde est le pyrimicarbe ou l'endosulfan.

7. Concentrés émulsionnables selon l'une quelconque des revendications 1 à 6, caractérisés en ce que le solvant est utilisé en présence d'un cosolvant polaire choisi dans le groupe constitué par les cétones, des alkylpyrrolidones et les dérivés de l'urée.

8. Concentrés émulsionnables selon l'une quelconque des revendications 1 à 7, caractérisés en ce qu'ils renferment en outre un stabilisant.

9. Concentrés émulsionnables selon l'une quelconque des revendications 1 à 8, caractérisés en ce qu'ils renferment de 0,1 à 60 % de pyréthrinoïde, de 5 à 85 % de solvant organique, de 1 à 30 % d'agents tensio-actifs et de 0,05 à 8 % de stabilisant.

10. Concentrés émulsionnables selon la revendication 9, caractérisés en ce qu'ils renferment de 0,5 à 30 % de pyréthrinoïde, de 10 à 75 % de solvant organique, de 1,5 à 20 % d'agents tensio-actifs et de 0,1 à 5 % d'agents stabilisants.

11. Concentrés émulsionnables selon la revendication 10, caractérisés en ce qu'ils renferment de 0,1 à 40 % de pyréthrinoïde et de 0,5 à 40 % d'insecticide(s) non pyréthrinoïde(s).

12. Concentrés émulsionnables selon la revendication 11, caractérisés en ce qu'ils renferment de 0,1 à 30 % de pyréthrinoïde(s) et de 0,5 à 40 % d'insecticide(s) non pyréthrinoïde(s).

13. Concentrés émulsionnables selon la revendication 12, caractérisés en ce qu'ils renferment de 0,5 à 15 % de pyréthrinoïde(s) et de 1,0 à 30 % d'insecticide(s) non pyréthrinoïde(s).

14. Application en agriculture des concentrés émulsionnables selon l'une quelconque des revendications 1 à 13, caractérisée en ce que les concentrés sont dilués dans l'eau et répandus sur les cultures à raison de 0,075 à 2,0 l de produit formulé par hectare.

## Claims

1. Emulsifiable concentrates (EC) containing:
- one or more pyrethrinoids,
- a solvent chosen from the methyl esters of a mixture of caprylic acid and capric acid, diethyl phthalate and ethyl-hexyl lactate,
- an emulsifying surfactant system producing an "oil in water" emulsion when applying the product constituted by a mixture of non-ionic surfactants and calcium dodecylbenzenesulphonate.

2. Emulsifiable concentrates according to claim 1, characterized in that the pyrethroid is chosen from the following compounds:
deltamethrin, acrinathrin, tralomethrin, permethrin, cypermethrin, alphamethrin, cyhalothrin, fenvalerate, cyfluthrin, flucythrinate, fluvalinate, fenpropathrin, bifenthrin, esfenvalerate, alphacypermethrin, betacyfluthrin, lambdacyhalothrin, taufluvalinate or silafluofen.

3. Emulsifiable concentrates according to claim 2, characterized in that the pyrethrinoid is deltamethrin.

4. Emulsifiable concentrates according to claim 2, characterized in that pyrethrinoid is acrinathrin.

5. Emulsifiable concentrates according to any one of claims 1 to 4, characterized in that they contain in addition to the pyrethrinoid, one or more non-pyrethrinoid insecticides.

6. Emulsifiable concentrates according to claim 5, characterized in that the non-pyrethrinoid insecticide is pyrimicarb or endosulphan.

7. Emulsifiable concentrates according to any one of claims 1 to 6, characterized in that the solvent is used in the presence of a polar co-solvent chosen from the group constituted by ketones, alkyl pyrrolidones and urea derivatives.

8. Emulsifiable concentrates according to any one of claims 1 to 7, characterized in that they contain in addition a stabilizer.

9. Emulsifiable concentrates according to any one of claims 1 to 8, characterized in that they contain 0.1 to 60% pyrethrinoid, 5 to 85% of organic solvent, 1 to 30% of surfactants and 0.05 to 8% of stabilizing agents.

10. Emulsifiable concentrates according to claim 9, characterized in that they contain 0.5 to 30% of pyrethrinoid, 10 to 75% of organic solvent, 1.5 to 20% of surfactants and 0.1 to 5% of stabilizing agents.

11. Emulsifiable concentrates according to claim 10, characterized in that they contain 1 to 40% of pyrethrinoid and 0.5 to 40% of non-pyrethrinoid insecticide(s).

12. Emulsifiable concentrates according to claim 11, characterized in that they contain 0.1 to 30% of pyrethrinoid(s) and 0.5 to 40% of non-pyrethrinoid insecticide(s).

13. Emulsifiable concentrates according to claim 12, characterized in that they contain 0.5 to 15% of pyrethrinoid(s) and 1.0 to 30% of non-pyrethrinoid insecticide(s).

14. Agricultural application of emulsifiable concentrates according to any one of claims 1 to 13, characterized in that the concentrates are diluted in water and spread on the crops at the rate of 0.075 to 2.0 l of formulated product per hectare.

## Patentansprüche

1. Emulgierbare Konzentrate (CE), umfassend
- ein oder mehrere Pyrethrinoide,
- ein Lösungsmittel, ausgewählt unter den Methylestern einer Mischung von Caprylsäure und Caprinsäure, Diethylphthalat und Ethyl-hexyl-lactat,
- ein emulgierendes oberflächenaktives System, das eine Emulsion "Öl-in-Wasser" bei der Anwendung des aus einer Mischung von nicht ionischen oberflächenaktiven Mitteln und Calcium-dodecylbenzolsulfonat bestehenden Produktes erzeugt.

2. Emulgierbare Konzentrate nach Anspruch 1, dadurch gekennzeichnet, daß das Pyrethrinoid unter den folgenden Verbindungen ausgewählt wird:
Deltamethrin, Acrinathrin, Tralomethrin, Permethrin, Cypermethrin, Alphamethrin, Cyhalothrin, Fenvalerat, Cyfluthrin, Flucythrinat, Fluvalinat, Fenpropathrin, Bifenthrin, Esfenvalerat, Alphacypermethrin, Betacyfluthrin, Lambdacyhalothrin, Taufluvalinat oder Silafluofen.

3. Emulgierbare Konzentrate nach Anspruch 2, dadurch gekennzeichnet, daß das Pyrethrinoid das Deltamethrin ist.

4. Emulgierbare Konzentrate nach Anspruch 2, dadurch gekennzeichnet, daß das Pyrethrinoid das Acrinathrin ist.

5. Emulgierbare Konzentrate nach irgendeinem der Ansprüche 1 bis 4, dadurch gekennzeichnet, daß sie außer dem Pyrethrinoid ein oder mehrere nicht pyrethrinoide Insektizide umfassen.

6. Emulgierbare Konzentrate nach Anspruch 5, dadurch gekennzeichnet, daß das nicht pyrethrinoide Insektizid das Pyrimicarb oder das Endosulfan ist.

7. Emulgierbare Konzentrate nach irgendeinem der Ansprüche 1 bis 6, dadurch gekennzeichnet, daß das Lösungsmittel in Anwesenheit eines polaren Co-Lösungsmittels verwendet wird, gewählt aus der Gruppe, die aus Ketonen, Alkylpyrrolidonen und Harnstoff-Derivaten besteht.

8. Emulgierbare Konzentrate nach irgendeinem der Ansprüche 1 bis 7, dadurch gekennzeichnet, daß sie außerdem einen Stabilisator umfassen.

9. Emulgierbare Konzentrate nach irgendeinem der Ansprüche 1 bis 8, dadurch gekennzeichnet, daß sie 0,1 % bis 60 % Pyrethrinoid, 5 % bis 85 % organisches Lösungsmittel, 1 % bis 30 % oberflächenaktive Mittel und 0,05 % bis 8 % Stabilisator umfassen.

10. Emulgierbare Konzentrate nach Anspruch 9, dadurch gekennzeichnet, daß sie 0,5 % bis 30 % Pyrethrinoid, 10 % bis 75 % organisches Lösungsmittel, 1,5 % bis 20 % oberflächenaktive Mittel und 0,1 % bis 5 % Stabilisator umfassen.

11. Emulgierbare Konzentrate nach Anspruch 10, dadurch gekennzeichnet, daß sie 0,1 % bis 40 % Pyrethrinoid und 0,5 % bis 40 % nicht pyrethrinoide(s) Insektizid(e) umfassen.

12. Emulgierbare Konzentrate nach Anspruch 11, dadurch gekennzeichnet, daß sie 0,1 % bis 30 % Pyrethrinoid(e) und 0,5 % bis 40 % nicht pyrethrinoide(s) Insektizid(e) umfassen.

13. Emulgierbare Konzentrate nach Anspruch 12, dadurch gekennzeichnet, daß sie 0,5 % bis 15 % Pyrethrinoid(e) und 1,0 % bis 30 % nicht pyrethrinoide(s) Insektizid(e) umfassen.

14. Verwendung der emulgierbaren Konzentrate nach irgendeinem der Ansprüche 1 bis 13 in der Landwirtschaft, dadurch gekennzeichnet, daß die Konzentrate in Wasser verdünnt und auf die Kulturen im Verhältnis von 0,075 bis 2,0 l formuliertes Produkt pro Hektar verteilt werden.
